(19) **Europäisches Patentamt / European Patent Office / Office européen des brevets**

(11) **EP 3 252 675 B1**

(12) **EUROPEAN PATENT SPECIFICATION**

(45) Date of publication and mention of the grant of the patent:
**23.09.2020 Bulletin 2020/39**

(51) Int Cl.:
***G06K 19/073*** *(2006.01)*

(21) Application number: **16172756.5**

(22) Date of filing: **02.06.2016**

(54) **RFID PROTECTION FOR CREDIT AND KEY CARDS**

**RFID-SCHUTZ FÜR KREDIT- UND SCHLÜSSELKARTEN**

**PROTECTION RFID DE CARTES DE CRÉDIT ET DE CARTES-CLÉS**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.12.2017 Bulletin 2017/49**

(73) Proprietor: **Creative Ideas UN Ltd.**
**London**
**SW5 9FE (GB)**

(72) Inventor: **MELNIKOV, Alexei**
**London, SW5 9FE (GB)**

(74) Representative: **Wittmann, Günther**
**Patentanwaltskanzlei Wittmann**
**Frans-Hals-Straße 31**
**81479 München (DE)**

(56) References cited:
**US-A1- 2008 166 962    US-A1- 2009 053 996**
**US-A1- 2009 152 363**

**Description**

The present invention relates to an improved protection apparatus for RFID cards.

RFID cards are used for controlling access, for authenticating and payment terminals, for authenticating with security applications at a computer and the like. RFID cards generally use near-field communication (NFC). Generally, an RFID card comprises a loop antenna that is illuminated by a reader device. The illumination signal generates an electric current within the loop antenna that causes an electronic circuit on the RFID card to operate and to emit a signal, such as an authentication value, via the antenna. Operation of an RFID card is known to the person skilled in the art such that it does not have to be described herein with further detail.

RFID cards have to be protected against misuse, such as being read out by an unauthorized reader. Prior art systems for protecting RFID cards comprise a power supply, such as a battery, that may be rechargeable. Further, prior art devices for protecting RFID cards comprise a microprocessor generating a jamming signal. Such prior art devices are limited in their usefulness, since the battery has a limited lifetime and the microprocessor electronics are bulky. In addition, the jamming signal of the prior art devices has a spectral form of white noise within the bandwidth of RFID reader.

US 2008/0166962 A1 discloses a scrambling electronic device adapted to be magnetically coupled with an inductive element of a contact-free external communication station. The scrambling device comprises active scrambling means adapted, in response to the magnetic field radiated by the external communication station, to generate a charge modulation capable of causing a collision with the charge modulation generated by the contact-free electronic device when the latter is arranged relative to said scrambling electronic device in accordance with a selected relationship, said resulting collision disabling data exchange between the contact-free external communication station and the contact-free electronic device.

US 2009/0053996 A1 discloses a circuit that includes a power module that includes an antenna. The power module is configured to generate power from a carrier signal received by the antenna. The circuit also includes a subcarrier generator powered by the power module when the carrier signal is received regardless of a communication protocol used in transmitting the carrier signal. The subcarrier generator generates an obscuring signal configured to obscure an information signal generated by another circuit energized by the carrier signal.

US 2009/0152363 discloses a smart card including a first integrated circuit chip and a second IC chip. The first IC chip receives a read signal from an external read device, and is responsive to the read signal to output a data signal to the external read device based on information data stored in a memory. The second IC chip receives the read signal from the external read device, and is responsive to the read signal to output an anti-skimming signal. The anti-skimming signal interferes with the data signal when both the first and second IC chips are in a read zone of the read device.

It is an object of the present invention to provide an RFID card protection apparatus overcoming the limitations of the prior art.

The object of the present invention is solved by a RFID card protection apparatus according to claim 1. The depending claims claim preferred embodiments.

The object of the present invention is solved by a RFID card protection apparatus having an antenna adapted to receive energy of a RF signal from a card reader, wherein the RF signal has a center frequency and an upper bandwidth and a lower bandwidth on each side of the center frequency. The card protection apparatus further comprises an energy storage element coupled with the antenna for storing energy received by the antenna. The card protection apparatus further comprises a jamming circuit generating a jamming signal output from an output port, wherein the jamming circuit is supplied with energy from the energy storage element by an input port of the jamming circuit coupled with the energy storage element. The card protection apparatus comprises a jamming circuit having an input port and an output port and generating a modulation signal at a subcarrier frequency output from the output port. The jamming circuit is supplied with energy from the energy storage element by the input port coupled with the energy storage element. The output port of the jamming circuit is coupled with the antenna so that the modulation signal generated by the jamming circuit modulates the signal induced in and transmitted by the antenna and generates a jamming signal has an upper bandwidth at the carrier frequency plus subcarrier frequency and/or low bandwidth at the carrier frequency minus subcarrier frequency. The jamming signal generated by the jamming circuit has central frequency around the sub-carrier frequency of a typical RFID card. The resulting jamming signal emitted by the RFID card protection apparatus has frequency components corresponding to the center frequency plus upper bandwidth and/or center frequency minus low bandwidth.

The inventive RFID card protection apparatus does not use any auxiliary power from a battery to suppress RFID signals generated by RFID readers. The inventive RFID card protection apparatus offers protection for RFID enabled devices, such as RFID cards, against unauthorized access. Such RFID enabled devices may comprise credit cards, passports, building access cards and the like. The devices of the prior art are powered by an internal power supply, such as a battery. Since the present invention does not rely on an internal power supply, the card protection apparatus provides a smaller form factor and increases convenience for users.

The term a first component is coupled to a second component has to be interpreted such that arbitrary components may be interconnected between the first and second component.

The output port of the jamming circuit of the card protection apparatus according to the present invention is coupled with the antenna and the jamming signal is transmitted by the antenna. The antenna may be the resonance tuned antenna. The antenna may have its resonance frequency at the center frequency of the RF signals from the card reader.

The present invention uses energy harnessed and extracted, respectively from the RFID reading/transmitting device to power the jamming circuit. In contrast thereto, prior art devices use a separate power supply, such as a battery, for generating and transmitting the jamming signal.

The RFID card protection apparatus further comprises a first switching element adapted to alternatingly activate the jamming signal emitted from the antenna and to alternatingly switch the energy from the antenna to the energy storage element.

During the first time span the jamming signal is emitted by the antenna. During the second time span energy received by the antenna from the illuminating signal is stored in the energy storage element. Energy from the energy storage element may be continuously used for generating a jamming signal by the control circuit (during both first and second time spans). Thereby, the antenna may be used for extracting energy from illuminating signal and for emitting a jamming signal. The first time span may commence as soon as enough energy for generating the jamming signal over a predetermined time span is stored in the energy storage element, typically less than approximately 0.1 millisecond.

The first switching element may comprise two conducting ports and one control port. At the control port of the first switching element an oscillating signal is applied. One of the conduction ports may be coupled with the antenna. The other conduction port of the switching element may me coupled to a fixed voltage, such as ground.

The jamming circuit may comprise an oscillator circuit having an output at which an oscillating frequency is output and wherein the first switching element comprises two conduction ports and one control port and wherein the output port of the oscillator circuit is coupled with the control port of the first switching element. The oscillator circuit provides a modulated signal at the control port of the switching element. The switching element may be a transistor, such as a P-N-P bipolar transistor. The switching element may also be a MOSFET transistor or any other suitable transistor.

In a preferred embodiment the oscillating frequency of the oscillating signal corresponds to subcarrier frequency of a typical RFID card (approximately 800 kHz or 3 kHz). The oscillating frequency of the oscillating signal may be essentially equal to the subcarrier frequency of a typical RFID card. Thereby, an amplitude modulated jamming signal may be generated that is emitted by the antenna at the carrier frequency plus the subcarrier frequency and/or center frequency minus the subcarrier frequency. Due to the interference of the jamming signal with the signal emitted by the RFID card or cards to be protected, the structure (both phase and amplitude) of the signal received by the RFID reader is significantly altered, such that the RFID card to be protected cannot be read out.

The first port of the antenna may be coupled to the first port of a first capacitor and the second port of the antenna may be coupled to a first port of a second capacitor, wherein the second port of the first capacitor and the second port of the second capacitor may be coupled to a reference voltage. The reference voltage may be ground. The second capacitor is the energy storage element. The antenna forms an inductivity. The first capacitor, the antenna and the second capacitor form a resonance tuned antenna. The resonance frequency of the resonance tuned antenna is the carrier frequency of the RFID reading device, such as 13.56 MHz or 150 kHz. Thus, the inductivity of the antenna, the capacity of the first capacitor and the capacity of the second capacitor are selected such that they form a circuit having a resonance frequency that is equivalent to the carrier frequency of the reader.

The input port of the oscillator circuit is coupled to the second port of the antenna via a switch, which can be a part of the oscillator. The antenna receives and generates an oscillating signal having the center frequency significantly higher than the frequency generated by the oscillator. The antenna generates a baseband signal, in other words, the center frequency. The oscillating circuit acts as a modulator and generates a jamming signal at the subcarrier frequency of a typical RFID card (around 800 kHz or 3 kHz). This intermediate jamming signal through a switch, which is coupled with the antenna, imposes amplitude modulation on the oscillations in the antenna. The resulting signal generated by the antenna has an upper bandwidth at the carrier frequency plus the subcarrier frequency and/or low bandwidth at the carrier frequency minus the subcarrier frequency.

The oscillating circuit may comprise a third capacitor and a first inductivity connected between the input port and the output port of the oscillating circuit. The third capacitor and the first inductivity form a resonance circuit that is tuned to a subcarrier frequency. The resonance frequency of the resonance circuit corresponds to or is equal to the oscillating frequency of the oscillating signal.

The first switching element may comprise a transistor forming in its non-conducting state a detection diode coupled with the antenna.

The output of the oscillator circuit may be coupled in one embodiment with the control port of the first switching element. In this embodiment the first switching element is not part of the oscillating circuit and acts as a detection diode and control switch.

The RFID card protection apparatus may further comprise a second switching element, wherein the first switching element and second switching element form a multivibrator. In this embodiment the first switching element acts as a detection diode, a control switch and as part of a multivibrator.

Brief description of the drawings

The invention is now being described by an exemplary and non limiting embodiment with reference to the enclosed drawings, wherein:

Figure 1 shows an overview depicting functional blocks of a RFID protection device;

Figure 2 shows a timing diagram of figure 1;

Figure 3 shows an exemplary frequency spectrum diagram;

Figure 4 shows a Bode diagram and an oscillogram;

Figure 5 depicts a spectrum and phase diagram;

Figure 6 shows a detailed schematic of the first embodiment of the present invention;

Figure 7 shows a time diagram of the first embodiment of the present invention;

Figure 8 shows a frequency diagram of the first embodiment of the present invention;

Figure 9 shows a Bode diagram of the first embodiment of the present invention;

Figure 10 shows a detailed schematic of the second embodiment of the present invention;

Figure 11 shows a time diagram and Bode diagram of the second embodiment of the present invention;

Figure 12 shows a detailed schematic of the third embodiment of the present invention; and

Figure 13 shows a time diagram and Bode diagram of the third embodiment;

Detailed description

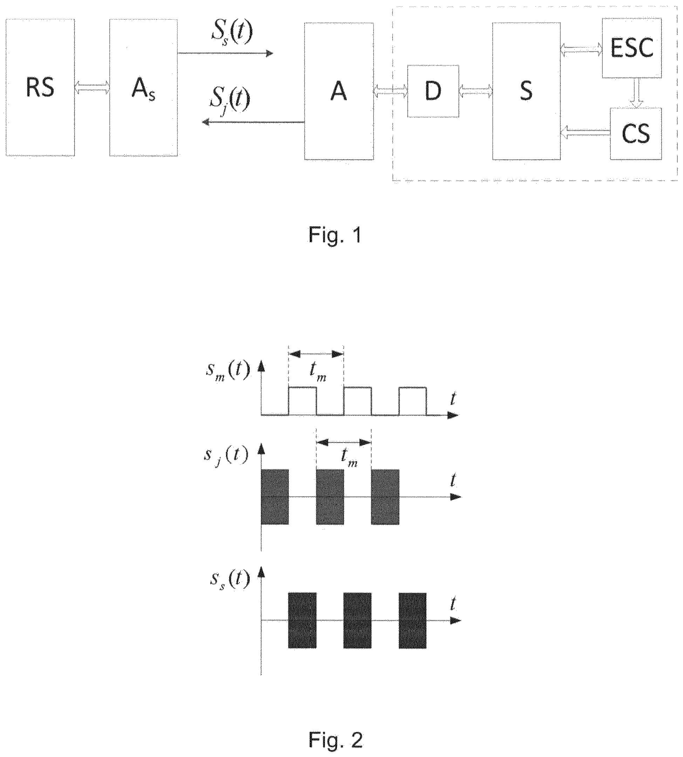

Figure 1 shows functional blocks of the RFID card protection apparatus according to the present invention. A block A represents a resonance tuned antenna. A detector D is connected to the antenna A. Block ESC represents an energy storing element for storing a portion of energy absorbed by the antenna. An electronic switch S is connected to the detector D, the energy storage element ESC as well as a control circuit CS.

A reader RS sends a reader signal $s_s(t)$ via a reader antenna $A_s$ to the antenna A of the RFID card protection apparatus A.

The control circuit is powered by the energy storage element ESC. The control circuit CS generates a jamming signal. The control circuit CS may be coupled with the resonance tuned antenna A through a switch. The jamming signal is output into an electronic switch S and fed into the antenna A. The control circuit CS modulates the baseband signal induced in and transmitted by the antenna A with amplitude modulation.

The antenna A is a resonance tuned loop antenna of the jamming device. The antenna A is adapted for both receiving the electromagnetic signal from RFID scanner-reader RS as well as for transmitting the jamming signal $s_j(t)$. The switch S connects and disconnects the detector D from the energy storage device ESC. The jamming signal $s_j(t)$ is an amplitude modulated signal of the resonance tuned loop antenna of the RFID card protection apparatus. The control circuit/modulator CS generates the modulated control signal $s_m(t)$ having the period $t_m$.

The electronic switch S is operated such that the resonance tuned antenna A can absorb electromagnetic signal from the reader and feed part of it into the energy storage ESC element during a first time span. During a second time span the electronic switch S is switched on by the jamming signal from the control circuit CS in such a way that amplitude modulation is applied to the oscillations in the resonance tuned antenna A.

Figure 2 shows the general operation of the RFID card protection apparatus. When the switch S is closed during a first time span, the modulation signal generated by the control circuit CS is zero and the loop antenna A of the RFID card protection apparatus is emitting the jamming signal $s_j(t)$. When the switch is open during a second time span, the modulation signal generated by the control circuit CS is above zero and the loop antenna A is not transmitting. During this time span, almost all of the energy received by the loop antenna A from the RFID scanner-reader is channelled through the detector D to the energy storage capacitor ESC and charges it.

In each cycle the energy storage capacitor ESC is being gradually charged. After several cycles of the first and second time span, a steady state is reached when the energy received by the antenna A equals to the energy consumed by the RFID card protection apparatus.

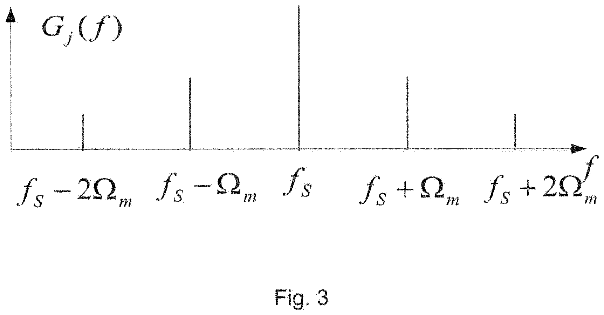

Figure 3 shows the spectrum of the amplitude modulated jamming signal Sj(t) of one embodiment. $G_j(f)$ indicates the spectrum of the jamming signal, $f_S$ indicates carrier frequency of the RFID scanner-reader, and

$$\Omega_m = \frac{1}{t_m}$$ indicates the modulation frequency. In one embodiment the modulation frequency is equal to the subcarrier frequency of a typical RFID card (around 800 kHz or 3 kHz).

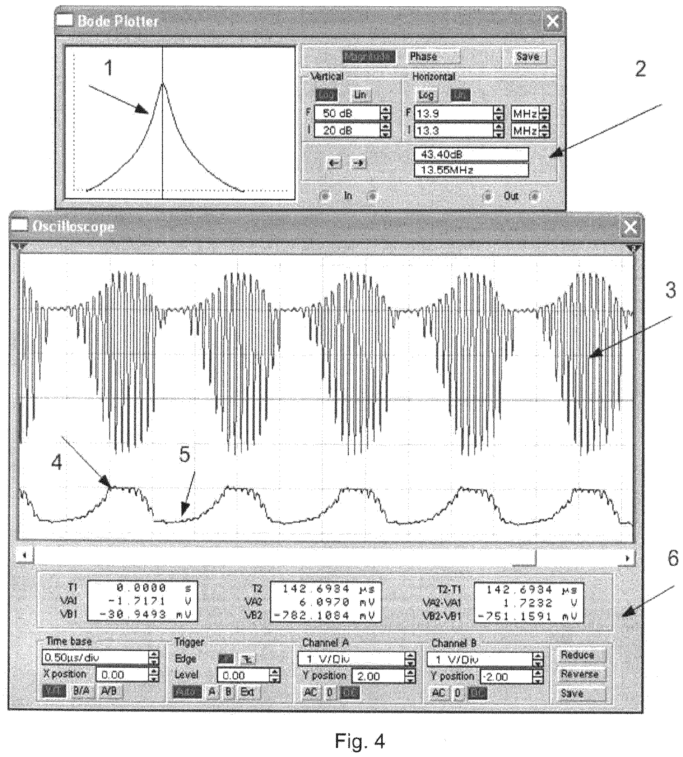

Reference is made to figure 4 showing a Bode plot 1 and an oscillogram 6 in the time domain of the embodiment described with reference to figures 1 to 3. The Bode plot 1 shows frequency response spectrum of the tuned circuit loop antenna A. The antenna A has a center frequency of 13.56 MHz and an attenuation of 43.4 dB per octave as indicated by reference numeral 2.

Reference numeral 3 shows an oscilogram of the jamming signal emitted by the antenna A. Reference numerals 4 and 5 show the modulated control signal Sj(t) output by the control circuit CS. This jamming signal Sj(t) is generated by the control circuit CS during both spans of operations. During a first time span 4 the control has an oscillating signal with high positive level causing the switch S to close. During a second time span 5 the control signal has a negative level causing the switch S to open. During the second time span the electronic storage capacitor is recharged.

Fig. 4 contradicts to Fig. 2 with respect to the signals 4, 5 and $s_m$.

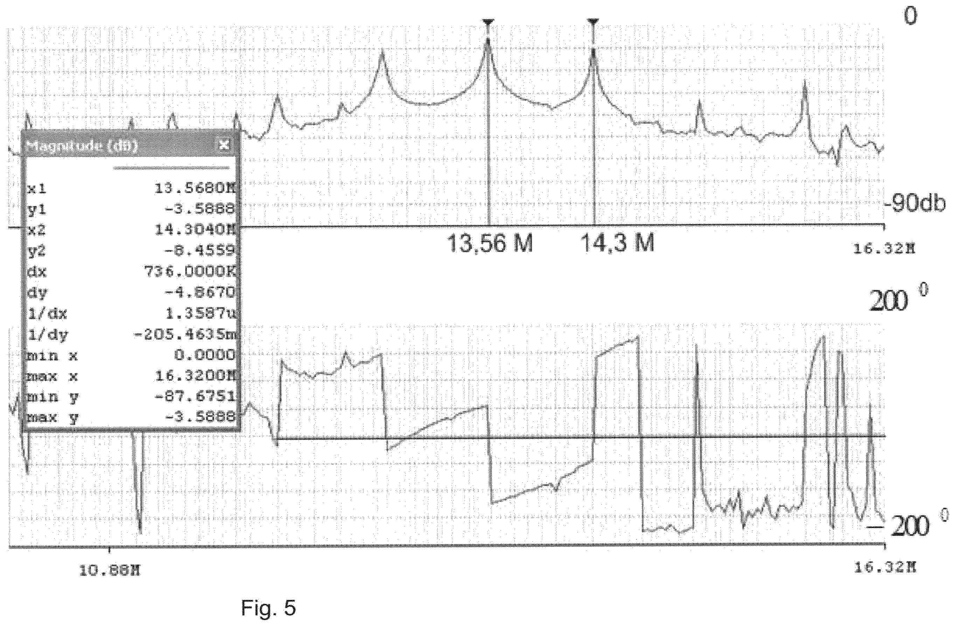

As can be seen in Figure 4, the switching process is gradual. This has a positive implication on the quality and efficiency of the jamming signal $s_j(t)$ as shown in Figure 5a in the frequency domain and in Figure 5b in the phase domain. Due to the gradual change in the amplitude of the switching signal the average level of spurious harmonics is relatively low, at -30 dB of the useful components of the jamming signal.

The RFID card protection apparatus does not use any other energy source apart from the energy from the illuminating RFID signal. The RFID card protection apparatus creates high-efficiency jamming signal at the upper and lower ends of the operating frequency band of communication channel between a reader and the RFID card to be protected. The carrier signal of the jamming signal, is generated by secondary radiation of the resonant loop antenna A. The signal generated by the secondary radiation of the antenna A is amplitude modulated by the control circuit/modulator CS. The RFID card protection apparatus generates energy through resonance energy collection inside the resonant loop antenna A and does not need a power supply, such as a battery.

Now, calculation of the parameters of the components of the RFID protection circuit is discussed. To ensure maximum efficiency of the resonance tuned loop antenna A, it needs to be tuned to the carrier frequency of the incoming signal emitted by the RFID scanner-reader and it should have the highest possible quality factor Q.

These parameters of the antenna A can be calculated as the carrier frequency of the RFID scanner-reader is known:

$$f_S \approx \frac{1}{2\pi\sqrt{L_A C_A}} \quad ; \quad (1)$$

wherein

$f_S$ is the carrier frequency of the RFID scanner-reader;

$L_A$ is the inductance of antenna A; and

$C_A$ is the capacity of antenna A .

The unloaded quality factor $Q_A$ of the loop antenna can be determined using the following relationship:

$$Q_A = \sqrt{\frac{L_A}{C_A}} \quad ; \quad (2)$$

wherein
$Q_A$ is the unloaded quality factor of antenna A.

As follows from (2), a maximum Q factor $Q_A$ is achieved at the lowest capacity of loop antenna A ($Cmin_A$) and maximum inductance of the antenna ($Lmax_A$).

In practise, $Cmin_A$ is limited by the way the antenna is constructed. The capacity is formed by the capacitance between the individual turns of the loop antenna.

Due to small form factor limitation of the jamming device and the resulting restrictions imposed on the loop antenna A, the maximum inductance $Lmax_A$ during experiments was achieved with loop antenna A consisting of 4 turns of copper wire.

Hence, assuming carrier frequency $f_S$ = 13.56 MHz, we calculate

$$C\min{}_A \approx 20 \times 10^{-12} \text{F} \ (20 \ \text{pF}) ;$$

$$L\max{}_A \approx 6.88 \times 10^{-6} \text{F} \ (6.88 \ \mu\text{H}) ;$$

$$Q\max{}_A \approx \sqrt{\frac{L\max{}_A}{C\min{}_A}} = \sqrt{\frac{6.88 \times 10^{-6}}{20 \times 10^{-12}}} \approx 586$$

.

The loaded quality factor $Q_{LA}$, or Q factor including secondary radiation of the loop antenna, can be approximated by:

$$Q_{LA} = \frac{Q\max{}_A}{2} = 293$$

.

Therefore, the loaded quality factor $Q_{LA}$ of the resonant tuned loop antenna is relatively high, which implies high radiation efficiency of the antenna. In practice, however, it is virtually impossible to achieve such high Q factor. In real life experiments with different designs of resonance tuned loop antennas limited by dimensions of a typical credit card showed that loaded Q factor lies within 70 to approximately 100.

The requirements for components of the energy storage for the RFID jamming device are that the dimensionion of the detector D, the switch S and the energy storage capacitior ESC are as small as possible. The detector D may comprise a diode ideally having a minimal resistance for the forward bias polarity, and maximum resistance for the reverse voltage polarity. The switch S should have minimal resistance in open state and maximum resistance in closed state in order to reduce energy loss during the energy collection stage. The energy storage capacitor ESC should have a small form factor and minimal loss. The control circuit CS should be able to operate at very low voltage and fully open and close the electronic switch S. Due to small form factor of the jamming device (e.g. 85.60 mm × 53.98 mm × 0.7 mm), all elements of the jamming device should be subject to strict size limits. Most of the requirements are contradictory and are hard to achieve. One of the solutions is to re-use the same elements for different functions.

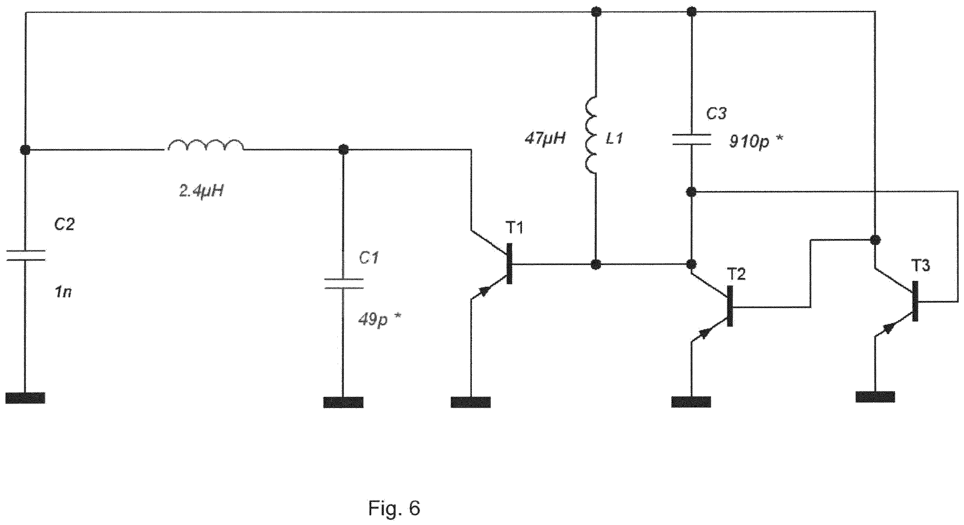

Reference is made to Fig. 6 showing a schematic of one embodiment of the inventive RFID protection apparatus. The loop antenna LA and the first capacitor C1 and second capacitor C2 form the resonance tuned antenna A having a resonance frequency at the frequency of the carrier of the illuminating signal, such as 13.56 MHz. The loop antenna LA comprises a first port coupled with a first port of the first capacitor C1. The second port of the loop antenna LA is coupled with a first port of the second capacitor C2. The second port of the first capacitor C1 and the second port of the second capacitor C2 are connected to a common reference voltage, such as ground.

The first transistor T1, a first inductor L1 and a third capacitor C3 form an electronic switch. The emitter of the first transistor T1 (pnp bipolar transistor) is connected to ground. The collector of the first transistor T1 is connected to the first port of the loop antenna LA. The first port of the first inductivity L1 is connected to the second port of the loop antenna LA. The first port of the third capacitor C3 is connected to the second port of the loop antenna LA. The second port of the first inductivity L1 is connected to the basis of the first transistor T1. The first port of the third capacitor C3 is connected to the basis of the first transistor T1.

The first transistor T1, when it is open (conducting), and capacitor C2 form the dynamic power source (collector junction of T1 performs as a diode). The transistor T1 is open during a first time span. During the first time span energy extracted by the antenna from the illuminating signal emitted by the RFID reader is stored in the capacitor C2 forming the electronic storage capacitor. During this phase the tuned circuit (LA, C1 and C2) is in short-circuit state and the loop antenna LA is not emitting.

When the first transistor T1 is closed (not conducting), the loop antenna LA of the tuned circuit (LA, C1 and C2) begins to emit electromagnetic signal at the center frequency which is equivalent to the carrier frequency of the illuminating signal.

Due to periodic shift from one phase to another, the signal emitted by the loop antenna A acquired amplitude modulation.

The first inductivity L1, and the third capacitor C3 form an oscillation circuit tuned to a subcarrier frequency of a typical RFID card (e. g. 800 kHz or 3 kHz). The first inductor L1 and and the third capacitor C3 together with the second transistor T2 and third transistor T3 form a multivibritor which acts as modulation circuit The emitter of the second transistor T2 and the emitter of the third transistor T3 are connected to the common reference voltage, such as ground. The collector of the second transistor T2 is connected to the basis of the first transistor T1, the second port of the first inductivity L1 and the second port of the third capacitor C3. The basis of the second transistor T2 is connected to the second port of the loop antenna LA and the collector of the third transistor T3. The basis of the third transistor T3 is connected to the basis of the first transistor T1, the second port of the first inductivity L1 and the second port of the third capacitor C3.

The oscillating frequency of the oscillating circuit has been optimized such that it corresponds to a subcarrier frequency of a typical RFID card. In one embodiment, the frequency of the jamming signal is tuned to 800 kHz.

This embodiment of the RFID card protection apparatus has been optimized to maximize efficiency and to reduce the required induced voltage level at the first capacitor C1 at which the RFID card protection apparatus is still operating.

Efficiency was measured as:

$$\eta = \frac{P_{nc}}{P_{not}} \cdot \quad (1),$$

wherein $\eta$ indicates the efficiency, $P_{nc}$ the power of transmitted jamming signal and $P_{not}$ the power that can be collected from the illuminating signal from the surface of the jamming device antenna.

The inventors of the present invention recognized that the increased efficiency of the transmitter can be achieved by optimization of the electronic switch, which is implemented as the transistor T1. To achieve a high efficiency, the transistor T1 must be both fully open and fully closed during phases of modulation cycle.

The inventors have observed that with the use of resonance transformation of resistance the required voltage induced by the illuminating signal from the RFID reader in the loop antenna to operate the jamming device efficiently could be significantly reduced. The effect is that within a tuned circuit, i.e. a resonance tuned antenna, wherein the first capacitor C1, the loop antenna A, and the second capacitor C2 are operated at resonance frequency, the circuit voltage may be significantly greater than the voltage induced by the illuminating electromagnetic field in the loop antenna A.

Generally, the components at the schematic diagram of Fig. 6 have the following functionality. The loop antenna LA and capacitors C1, C2 form a small-sized tuned circuit with resonant frequency of 13.56 MHz, the center frequency of the illuminating signal. The transistor T1, the inductor L1 and the capacitor C3 form the electronic key management system. The first transistor T1, when it is open (conducting), and capacitor C2 form the dynamic power source (the collector junction of T1 performs as a diode). When the first transistor T1 is closed (not conducting), the loop antenna A of the tuned circuit (L, C1 and C2) begins to emit electromagnetic signal at the center frequency (13.56 MHz).

The second transistor T2, the third transistor T3, the first inductor L1 and the third capacitor C3 form the oscillator circuit and modulator, respectively. The first inductor L1 and the third capacitor C3 are tuned to 800 kHz.

Now, the operation of the inventive RFID protection device is explained as it moves from standby mode to active mode. In the absence of an illumination signal from the RFID reader, the first, second and third transistors T1, T2 and T3 are shut, and the entire RFID protection device is in standby mode. In this state, there is no electrical current flowing through the RFID protection device.

When the tuned loop antenna LA is in the zone of the RFID reader, it is excited with the electromagnetic radiation emitted by the reader. The resulting current charges the capacitor C2 and is detected by the collector junction of the first transistor T1. As soon as the DC voltage at the first capacitor C2 exceeds a predetermined threshold, such as 0.3 volts, the generation of the modulation signal by the modulator and oscillating circuit starts. As a result, at the base of the first transistor T1 appears modulation signal that leads to the periodic opening (conducting) and closing (not conducting) of the first transistor T1. In one embodiment, the voltage at the base of the first transistor T1 may reach several volts with different polarities, which leads to alternatingly fully opening and closing of the first transistor T1. The result is an amplitude modulation with modulation ratio up to 100 % in the tuned circuit (A, C1 and C2). It should be noted, when the transistor T1 is open (i.e. conducting), the capacitor C2 is recharged .

Within the loop antenna LA there are two processes that occur simultaneously. During the first time span energy is pumped into the loop antenna LA from the illuminating device (RFID reader) that leads to significant current being generated in the resonance tuned circuit which consists of the antenna A, first capacitor C1 and second capacitor C2 (an amplitude of several volts can be reached). The loop antenna A then starts to emit electromagnetic waves at the resonance frequency (in this case also at the frequency of the illuminating device (RFID reader) of 13.56 MHz). After a predetermined time span, there comes a process of dynamic equilibrium $P_n = P_{uz} + P_{pot}$, wherein $P_n$ indicates the strength of illuminating signal, $P_{uz}$ indicates the power emitted by the loop antenna and $P_{not}$ indicates power losses in loop antenna LA as well as the power consumption of the RFID protection device.

Current that is generated in the resonance tuned circuit formed by the antenna A, first capacitor C1 and second capacitor C2 in an active phase can reach up to approximately 0.015 A. It should be noted that the jamming device receives all of the energy for its operation from the loop antenna.

As a result of alternating short circuit cycle of the loop antenna, the signal emitted by the loop antenna acquires amplitude modulation. In the case of 100% amplitude modulation, 50% of the power is radiated in each of the sidebands. Sidebands of such amplitude modulation are very effective at jamming receiving circuits of all systems based on coherent signal processing, including both RFID scanner and RFID enabled credit cards.

When the illuminating signal from RFID scanner disappears, the second capacitor C2 discharges through continuing to function as control circuit until the voltage at the second capacitor C2 declines to 0.3 volts or smaller. At this point the RFID protection device stops working. The RFID protection device switches back to standby mode.

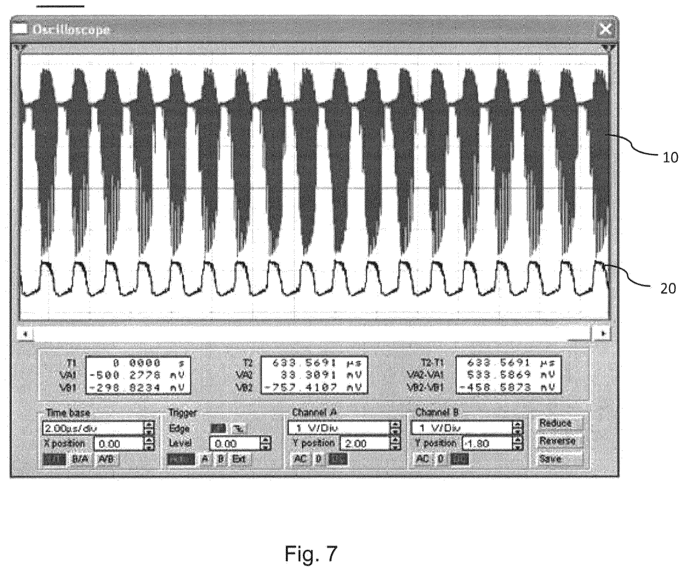

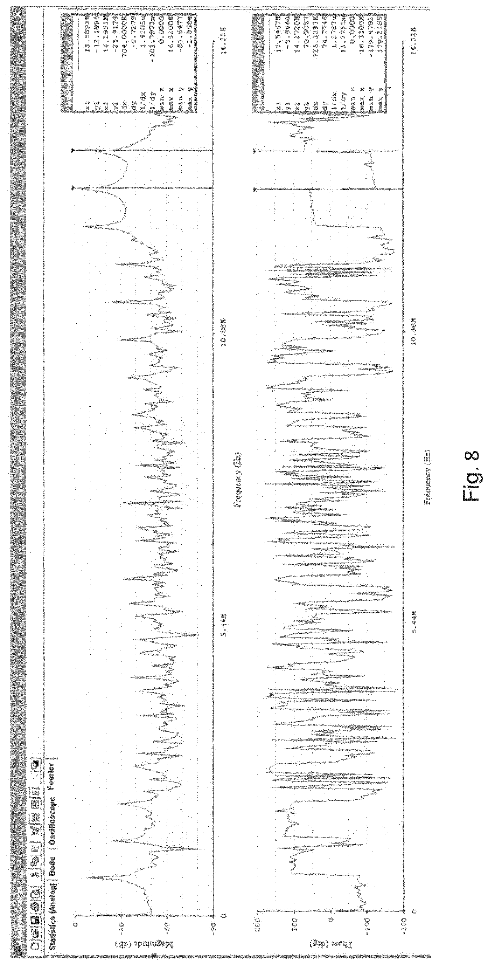

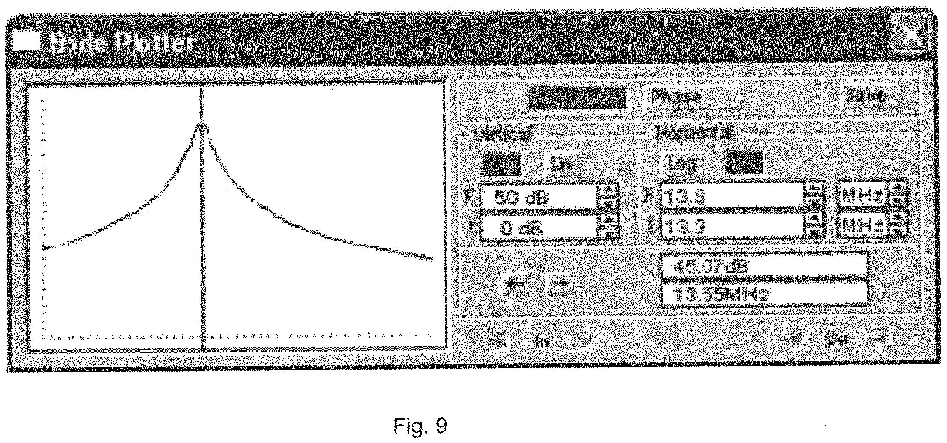

Figure 7 shows a time diagram of the RFID protection device during operation. The signal 10 is the voltage at the antenna. The signal 20 is the voltage at the base of the first transistor. Figure 8 shows a frequency diagram of the RFID protection device during operation, Figure 9 shows a Bode diagram of the tuned loop antenna LA of the RFID protection device. In figure 3 it can be recognized that the first transistor T1 alternatingly switches to first phase when second capacitor C2 is recharged and the second phase when the loop antenna LA emits electromagnetic signal at the central frequency. The frequency diagram shows that the jamming signal is emitted at the carrier frequency, the carrier frequency plus subcarrier frequency and the carrier frequency minus subcarrier frequency.

In the current device, the transmitter is based on bipolar transistors with P-N-P structure. This is due to the fact that in the bipolar transistors of such type the collector junction has superior ability to detect weak signals than the collector junction of N-P-N transistors.

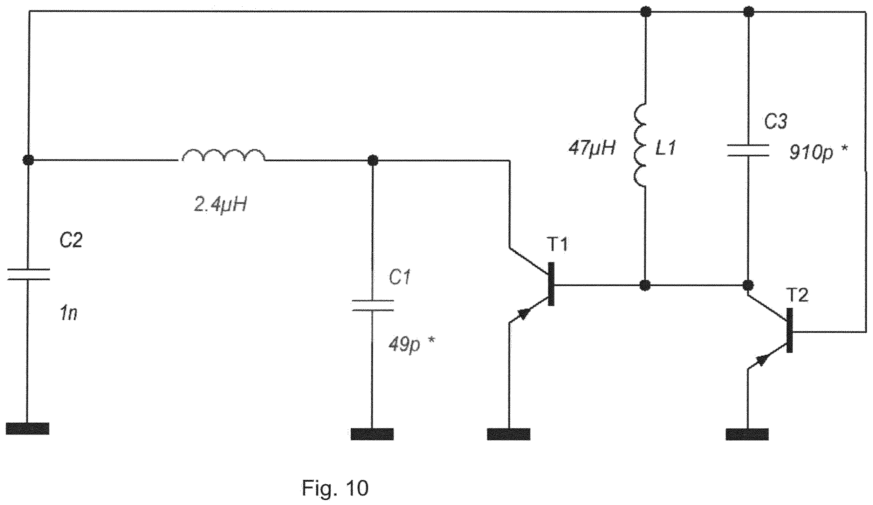

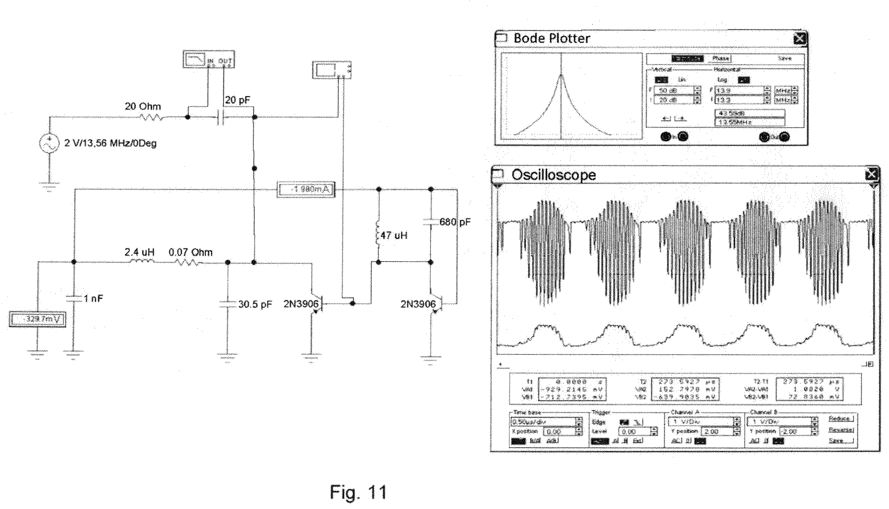

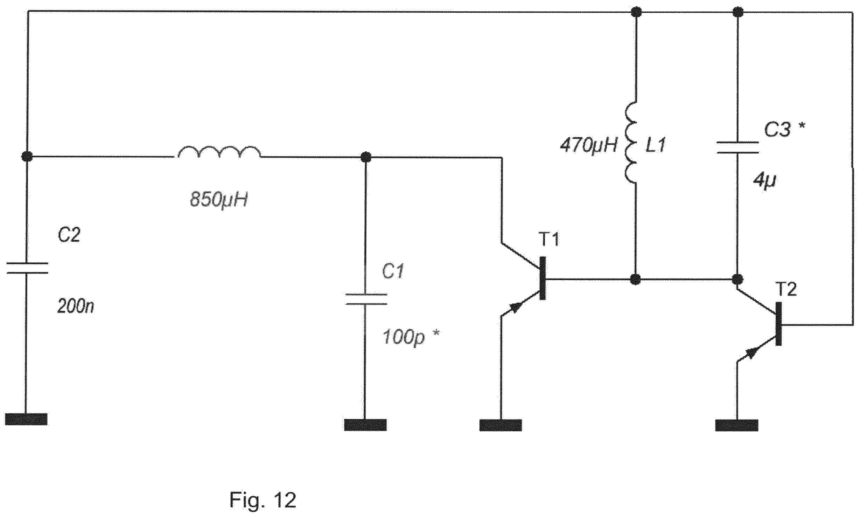

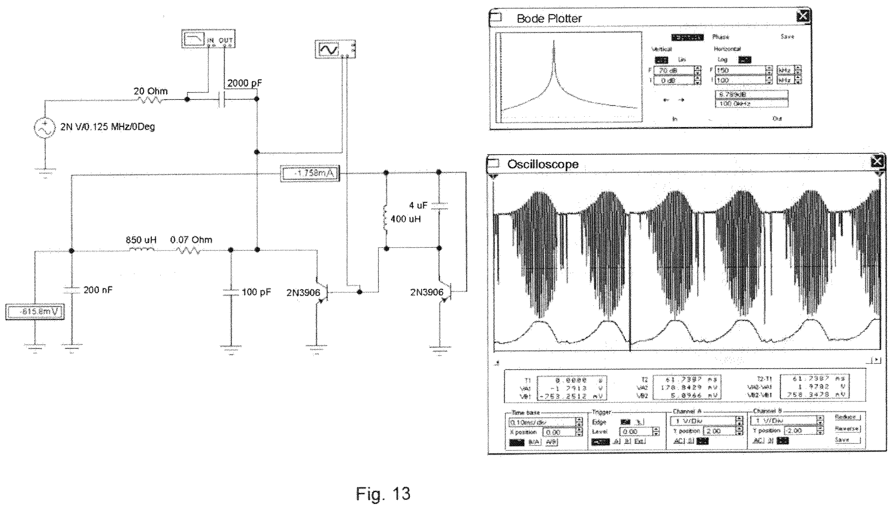

With reference to figures 10 to 13, further embodiments of the present invention are discussed. The embodiment discussed with reference to figures 10 and 11 is operated at the carrier frequency of 13.56 MHz and the embodiment of figures 12 and 13 is operated at the carrier frequency of 125 Mhz.

Reference is made to figure 8. The loop antenna LA' and the first capacitor C1' and second capacitor C2' form the resonance tuned loop antenna A having a resonance frequency at the carrier frequency of the illuminating signal, e.g. 13.56 MHz. The loop antenna LA comprises a first port coupled with a first port of the first capacitor C1'. The second port of the loop antenna LA is coupled with a first port of the second capacitor C2'. The second port of the first capacitor C1' and the second port of the second capacitor C2' are connected to a common reference voltage, such as ground.

The first transistor T1', a first inductor L1' and a third capacitor C3' form an electronic key management system. The emitter of the first transistor T1' (P-N-P bipolar transistor) is connected to ground. The collector of the first transistor T1' is connected to the first port of the loop antenna LA. The first port of the first inductivity L1' is connected to the second port of the loop antenna LA. The first port of the third capacitor C3' is connected to the second port of the loop antenna LA. The second port of the first inductivity L1' is connected to the basis of the first transistor T1'. The first port of the third capacitor C3' is connected to the basis of the first transistor T1'.

The first transistor T1, when it is open (conducting), and second capacitor C2 form the dynamic power source, wherein the collector junction of T1 performs as a diode. The transistor T1 is open (conducting) during a first time span. During the first time span energy extracted by the antenna from the illuminating signal emitted by the RFID reader is stored in the second capacitor C2 forming the electronic storage capacitor. During this phase the tuned circuit (L, C1 and C2) is in short-circuit state and the loop antenna LA is not emitting.

A basis of a second transistor T2' is connected to the second port of the antenna LA'. An emitter of the second transistor T2' is connected to ground. A collector of the second transistor T2' is connected to the basis of the first transistor T1'.

When the first transistor T1 is closed (not conducting), the loop antenna A of the tuned circuit (A, C1 and C2) begins to emit electromagnetic signal at the center frequency, which is equivalent to the resonance frequency of the antenna (which is also equal to the frequency of the illuminating signal).

Due to periodic shift from one phase to another, the signal emitted by the loop antenna A acquired an amplitude modulation.

The loop antenna A, the first and second capacitors $C_1$, $C_2$ form a small-sized tuned circuit with resonant frequency at 13.56 MHz . The transistor T1' acts as electronic switch, and the collector junction of $T_1$ acts as rectifier diode. Further, the first transistor T1' in conjunction with the second transistor T2' forms an asymmetric multivibrator. As mentioned before, the second capacitor C2' acts as energy storage capacitor. The first and second transistors T1', T2', the first inductor L1' and the third capacitor C3' act as control circuit/modulator for the electronic switch T1'. The oscillating frequency of the multivibrator equals to a subcarrier frequency of a typical RFID card (e. g. 800 kHz or 3 kHz).

With respect to figure 11 it can be recognized that the RFID protection device reaches steady state operation significantly faster and at lower RFID scanner-reader signal strength than the embodiment described with reference to figures 6 to 9.

Particularly, the electronic switch embodied by $T_1$ is switched on and off better than in the embodiment of figures 6 to 9. The internal circuitry of the device consumes approximately 30% less energy than the embodiment of figures 6 to 9. The effective range of operation of the jamming device increased by 15% compared to the embodiment of figures 6 to 9.

In the embodiment the components of the RFID protection apparatus have the following values:

    Loop antenna LA': 850 $\mu$H
    First capacitor C1': 100 pF
    Second capacitor C2': 200 nF
    Third capacitor C3': 4 $\mu$F
    First inductor L1': 470 $\mu$H

Figures 12 and 13 show an embodiment operated at a center frequency of 125 kHz. The components of the embodiment according to figures 12 and 13 correspond in their function to the components of embodiment according to figures 10 and 11. However, the components according to the embodiment in figures 12 and 13 have the following values:

    Loop antenna LA: 2.4 $\mu$H
    First capacitor C1': 49 pF
    Second capacitor C2': 1 nF
    Third capacitor C3': 910 pF
    First inductor L1': 47 $\mu$H

It is an advantage of the present invention that a protection of an RFID card is provided by a apparatus having small form factor and no power source like a battery.

Effective jamming is achieved, since the RFID protection device emits a jamming signal at the carrier frequency as well two side bands, corresponding to the carrier frequency plus subcarrier frequency and/or carrier frequency minus subcarrier frequency.

With such jamming signal the effectiveness of the jammer is achieved not due to the power of the jamming signal exceeding the power of the useful signal, but due to the effect of interference between wideband coherent signal and the narrow band jamming radiation.

As a result of the interference of the two signals (jamming signal and the signal emitted by an RFID card - the useful signal), the amplitude-phase structure of the useful signal reaching the RFID scanner-reader is heavily degraded. Such signal cannot be correctly decoded by the receiver. As a result, based on inventor's research when using narrow band jamming signal, the power of the jamming signal can be lower than the power of the useful signal by 15-20 dB for the effective suppression of the useful signal at the receiver. Thereby, the RFID card can be protected against unauthorized access.

## Claims

1.  RFID card protection apparatus, comprising:

    - an antenna (A) adapted to receive energy from a RF signal emitted by a card reader, said RF signal having a narrow band spectrum at the carrier frequency;
    - an energy storage element (ESC) coupled with the antenna for storing energy received by the antenna; and
    - a jamming circuit having an input port and an output port and generating a modulation signal at a subcarrier frequency output from the output port, wherein the jamming circuit is supplied with energy from the energy storage (ESC) element by the input port coupled with the energy storage element (ESC);
    - wherein the output port is coupled with the antenna (A) such that the modulation signal generated by the jamming circuit modulates the signal induced in and transmitted by the antenna and generates a jamming signal having an upper bandwidth at the carrier frequency plus subcarrier frequency and/or lower bandwidth at the carrier frequency minus subcarrier frequency;

    **characterized by** a first switching element (T1) for alternatingly activating the jamming signal emitted by the antenna (A) and for alternatingly switching the energy absorbed by the antenna (A) to the energy storage element (ESC).

2.  RFID card protection apparatus according to claim 1, wherein the output port of jamming circuit is coupled with the antenna (A) and the jamming signal is output by the antenna (A).

3.  RFID card protection apparatus according to claim 1 or 2, wherein the antenna (A) is a resonance tuned antenna.

4.  RFID card protection apparatus according to any one of claims 1 to 3, wherein the antenna (A) is adapted such that its resonance frequency is equal to the carrier frequency of the RF signal from the card reader.

5.  RFID card protection apparatus according to any one of claims 1 to 4, wherein the first switching element (T1) comprises two conducting ports and one control port and wherein at the control port of the first switching element an oscillating signal is applied.

6.  RFID card protection apparatus according to claim 5, wherein oscillating frequency of the oscillating signal corresponds to the upper subcarrier frequency of a typical RFID card.

7.  RFID card protection apparatus according to any one of claims 1 to 6, wherein the first port of the antenna (A) is coupled to a first capacitor (C1) and the second port of the antenna (A) is coupled to a first port of a second capacitor (C2) comprising the energy storage element, wherein the second port of the first capacitor (C1) and the second port of the second capacitor (C2) is coupled to a reference voltage.

8.  RFID card protection apparatus according to claim 7, wherein the antenna (A), the first and second capacitor (C1, C2) are selected such that they form a circuit having a resonance frequency that is equivalent to the carrier frequency of the reader and/or scanner signal.

9.  RFID card protection apparatus according to claim 7 or 8, wherein the input port of the oscillator circuit is coupled to the second port of the antenna (A).

10. RFID card protection apparatus according to any one of claims 5 to 9, wherein the oscillating circuit comprises a third capacitor (C3) and a first inductivity (L1) connected between the input port and the output port of the oscillator circuit.

11. RFID card protection apparatus according to any one of claims 4 to 10, wherein the first switching element (T1) comprises a transistor forming in its non-conducting state a detection diode coupled with the antenna (A).

12. RFID card protection apparatus according to any one of claims 4 to 11, wherein the jamming circuit comprises an oscillator circuit having an output at which an oscillating frequency is output and the oscillator circuit is coupled with the control port of the first switching element (T1).

13. RFID card protection apparatus according to any one of claims 4 to 12, further comprising a second switching element, wherein the first switching element (T1') and second switching element (T2') form a multivibrator.

## Patentansprüche

1.  RFID-Karten-Schutzvorrichtung, aufweisend:

    - eine Antenne (A), die dazu ausgebildet ist, Energie von einem HF-Signal zu empfangen, das von einem Kartenleser imitiert wird, wobei das HF-Signal ein enges Bandspektrum bei der Trägerfrequenz aufweist;
    - ein Energiespeicherelement (ESC), das mit der Antenne zum Speichern von der Antenne empfangenen Energie gekoppelt ist; und

- eine Störschaltung mit einem Eingangsanschluss und einem Ausgangsanschluss und die ein Modulationssignal bei einer Unterträgerfrequenz erzeugt, die von dem Ausgangsanschluss ausgegeben wird, wobei die Störschaltung mit Energie von dem Energiespeicherelement (ESC) durch den Eingangsanschluss, der mit dem Energiespeicherelement (ESC) gekoppelt ist, versorgt wird;

- wobei der Ausgangsanschluss mit der Antenne (A) so gekoppelt ist, dass das Modulationssignal, das durch die Störschaltung erzeugt wird, eine Signal moduliert, das in der Antenne induziert und durch die Antenne übertragen wird, und ein Störsignal erzeugt, das eine obere Bandbreite bei der Trägerfrequenz plus der Unterträgerfrequenz und/oder bei der unteren Bandbreite der Trägerfrequenz minus der Unterträgerfrequenz aufweist;

- **gekennzeichnet durch** ein erstes Schaltelement (T1) zum alternierenden Aktivieren des Störsignals, das von der Antenne (A) emittiert wird und zum alternierenden Schalten der Energie, die durch die Antenne (A) an das Energiespeicherelement (ESC) absorbiert wird.

2. RFID-Karten-Schutzvorrichtung nach Anspruch 1, wobei der Ausgangsanschluss der Störschaltung mit der Antenne (A) gekoppelt ist und das Störsignal durch die Antenne (A) ausgegeben wird.

3. RFID-Karten-Schutzvorrichtung nach Anspruch 1 oder 2, wobei die Antenne (A) eine resonanzabgestimmte Antenne ist.

4. RFID-Karten-Schutzvorrichtung nach einem der Ansprüche 1 bis 3, wobei die Antenne (A) derart ausgebildet ist, dass ihre Resonanzfrequenz gleich der Trägerfrequenz des HF-Signals vom Kartenleser ist.

5. RFID-Karten-Schutzvorrichtung nach einem der Ansprüche 1 bis 4, wobei das erste Schaltelement (T1) zwei Leitungsanschlüsse und einen Steuerungsanschluss aufweist und wobei an den Steuerungsanschluss des ersten Schaltelementes ein oszillierendes Signal angelegt wird.

6. RFID-Karten-Schutzvorrichtung nach Anspruch 5, wobei die die Oszillationsfrequenz des oszillierenden Signals der oberen Unterträgerfrequenz einer typischen RFID-Karte entspricht.

7. RFID-Karten-Schutzvorrichtung nach einem der Ansprüche 1 bis 6, wobei der erste Anschluss der Antenne (A) mit einem ersten Kondensator (C1) gekoppelt ist und der zweite Anschluss der Antenne (A) mit dem ersten Anschluss des zweiten Kondensators (C2) gekoppelt ist, der das Energiespeicherelement aufweist, wobei der zweite Anschluss des ersten Kondensators (C1) und der zweite Anschluss des zweiten Kondensators (C2) mit einer Referenzspannung gekoppelt ist.

8. RFID-Karten-Schutzvorrichtung nach Anspruch 7, wobei die Antenne (A), der erste und zweite Kondensator (C1, C2) so ausgewählt sind, dass sie eine Schaltung mit einer Resonanzfrequenz bilden, die der Trägerfrequenz des Lesers und/oder des Scannersignals entsprechen.

9. RFID-Karten-Schutzvorrichtung nach Anspruch 7 oder 8, wobei der Eingangsanschluss der Oszillatorschaltung mit dem zweiten Anschluss der Antenne (A) gekoppelt ist.

10. RFID-Karten-Schutzvorrichtung nach einem der Ansprüche 5 bis 9, wobei die Oszillatorschaltung einen dritten Kondensator (C3) und eine erste Induktivität (L1) aufweist, die zwischen den Eingangsanschluss und den Ausgangsanschluss der Oszillatorschaltung geschaltet ist.

11. RFID-Karten-Schutzvorrichtung nach einem der Ansprüche 4 bis 10, wobei das erste Schaltelement (T1) einen Transistor aufweist, der in seinem nicht leitenden Zustand eine Detektordiode bildet, die mit der Antenne (A) gekoppelt ist.

12. RFID-Karten-Schutzvorrichtung nach einem der Ansprüche 4 bis 11, wobei die Störschaltung eine Oszillatorschaltung mit einem Ausgang aufweist, an dem eine Oszillationsfrequenz ausgegeben wird, und die Oszillatorschaltung mit dem Steueranschluss des ersten Schaltelementes (T1) gekoppelt ist.

13. RFID-Karten-Schutzvorrichtung nach einem der Ansprüche 4 bis 12, ferner aufweisend ein zweites Schaltelement, wobei das erste Schaltelement (T1') und das zweite Schaltelement (T2') einen Multivibrator bilden.

**Revendications**

1. Appareil de protection de carte RFID, comprenant :

- une antenne (A) qui est adaptée pour recevoir de l'énergie en provenance d'un signal RF qui est émis par un lecteur de carte, ledit signal RF présentant un spectre de bande étroite à la fréquence de porteuse ;

- un élément de stockage d'énergie (ESC) qui est couplé à l'antenne pour stocker l'énergie qui est reçue par l'antenne ; et

- un circuit de brouillage qui comporte un port d'entrée et un port de sortie et qui génère un signal de modulation à une fréquence de sous-porteuse qui est émis en sortie depuis le port de sortie, dans lequel le circuit de brouillage est alimenté par l'énergie en provenance de l'élément de stockage d'énergie (ESC) au moyen du port d'entrée qui est couplé à l'élément de stockage d'énergie (ESC) ;

- dans lequel le port de sortie est couplé à l'antenne (A) de telle sorte que le signal de modulation qui est généré par le circuit de brouillage module le signal qui est induit à l'intérieur de l'antenne et qui est émis par celle-ci et génère un signal de brouillage qui présente une bande passante supérieure à la fréquence de porteuse plus la fréquence de sous-porteuse et/ou une bande passante inférieure à la fréquence de porteuse moins la fréquence de sous-porteuse ;

**caractérisé par** un premier élément de commutation (T1) pour en alternance activer le signal de brouillage qui est émis par l'antenne (A) et pour en alternance commuter l'énergie qui est absorbée par l'antenne (A) sur l'élément de stockage d'énergie (ESC).

2. Appareil de protection de carte RFID selon la revendication 1, dans lequel le port de sortie du circuit de brouillage est couplé à l'antenne (A) et le signal de brouillage est émis en sortie par l'antenne (A).

3. Appareil de protection de carte RFID selon la revendication 1 ou 2, dans lequel l'antenne (A) est une antenne accordée en résonance.

4. Appareil de protection de carte RFID selon l'une quelconque des revendications 1 à 3, dans lequel l'antenne (A) est adaptée de telle sorte que sa fréquence de résonance soit égale à la fréquence de porteuse du signal RF en provenance du lecteur de carte.

5. Appareil de protection de carte RFID selon l'une quelconque des revendications 1 à 4, dans lequel le premier élément de commutation (T1) comprend deux ports de conduction et un seul port de commande et dans lequel, au niveau du port de commande du premier élément de commutation, un signal oscillant est appliqué.

6. Appareil de protection de carte RFID selon la revendication 5, dans lequel la fréquence d'oscillation du signal oscillant correspond à la fréquence de sous-porteuse supérieure d'une carte RFID typique.

7. Appareil de protection de carte RFID selon l'une quelconque des revendications 1 à 6, dans lequel le premier port de l'antenne (A) est couplé à un premier condensateur (C1) et le second port de l'antenne (A) est couplé à un premier port d'un deuxième condensateur (C2) qui comprend l'élément de stockage d'énergie, dans lequel le second port du premier condensateur (C1) et le second port du deuxième condensateur (C2) sont couplés à une tension de référence.

8. Appareil de protection de carte RFID selon la revendication 7, dans lequel l'antenne (A) ainsi que les premier et deuxième condensateurs (C1, C2) sont sélectionnés de telle sorte qu'ils forment un circuit qui présente une fréquence de résonance qui est équivalente à la fréquence de porteuse du lecteur et/ou d'un signal de dispositif de balayage/scannage.

9. Appareil de protection de carte RFID selon la revendication 7 ou 8, dans lequel le port d'entrée du circuit d'oscillateur est couplé au second port de l'antenne (A).

10. Appareil de protection de carte RFID selon l'une quelconque des revendications 5 à 9, dans lequel le circuit oscillant comprend un troisième condensateur (C3) et une première inductance (L1) qui sont connectés entre le port d'entrée et le port de sortie du circuit d'oscillateur.

11. Appareil de protection de carte RFID selon l'une quelconque des revendications 4 à 10, dans lequel le premier élément de commutation (T1) comprend un transistor qui forme, dans son état de non conduction, une diode de détection qui est couplée à l'antenne (A).

12. Appareil de protection de carte RFID selon l'une quelconque des revendications 4 à 11, dans lequel le circuit de brouillage comprend un circuit d'oscillateur qui comporte une sortie au niveau de laquelle une fréquence d'oscillation est émise en sortie et le circuit d'oscillateur est couplé au port de commande du premier élément de commutation (T1).

13. Appareil de protection de carte RFID selon l'une quelconque des revendications 4 à 12, comprenant en outre un second élément de commutation, dans lequel le premier élément de commutation (T1') et le second élément de commutation (T2') forment un multivibrateur.

Fig. 1

Fig. 2

Fig. 3

Fig. 4

Fig. 5

Fig. 6

EP 3 252 675 B1

Fig. 7

Fig. 8

Fig. 9

Fig. 10

EP 3 252 675 B1

Fig. 11

Fig. 12

Fig. 13

**EP 3 252 675 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080166962 A1
- US 20090053996 A1
- US 20090152363 A